# EUROPÄISCHE PATENTSCHRIFT

(11) **EP 1 790 233 B1**
(45) Veröffentlichungstag und Bekanntmachung des Hinweises auf die Patenterteilung: **12.01.2011**
(21) Anmeldenummer: 06020336.1
(22) Anmeldetag: 27.09.2006
(51) Int. Cl.: A23J 3/22

(54) **Ovo-lacto-vegetarisches Nahrungsmittel oder Nahrungsmittelzwischenprodukt**
Ovo-lacto vegetarian food or intermediate food product
Produit alimentaire ou produit alimentaire intermédiaire ovo-lacto-végétarien

(30) Priorität: 23.11.2005 DE 102005056104
(43) Veröffentlichungstag der Anmeldung: 30.05.2007
(73) Patentinhaber: TofuTown Lüneburger Heide GmbH, 21339 Lüneburg (DE)
(72) Erfinder: Weidhase, Heike, 20251 Hamburg (DE)
(74) Vertreter: Glawe, Delfs, Moll

(56) Entgegenhaltungen:
- WO-A-02/091844
- US-A- 3 627 536
- US-A- 3 674 500
- US-A- 4 548 823
- US-A- 5 709 900
- US-A1- 2005 112 268

## Beschreibung

Die Erfindung betrifft ein Verfahren zur Herstellung fleisch- oder fischähnlicher, faseringer, ovo-lacto-vegetarischer Nahrungsmittel oder Nahrungsmittelzwischenprodukte.

Die Herstellung von faserigen Produkten aus ovo-lacto-vegetarischen Rohstoffen ist aus offenkundiger Vorbenutzung bekannt.

Bei einem Verfahren werden die Eiweißstoffe in einer geeigneten Säure gelöst und dann ähnlich einem Spinnprozess durch Düsen gedrückt. Der austretende mehr oder weniger feine Strahl wird in ein geeignetes Bad aus vorzugsweise Natronlauge eingeleitet. Die Eiweißstoffe werden wahlweise als Fäden oder Fasern ausgefällt, welche alle die gleiche (durch die Düsen vorbestimmte) Form aufweisen. Die Fasern oder Fäden werden dann weiterverarbeitet, indem zum Beispiel Geschmacksstoffe und Bindemittel zugegeben werden und anschließend die Formgebung erfolgt.

Auch ist es möglich, diese Produkte zu dehydrieren, so dass diese längere Zeit haltbar sind und zu einem späteren Zeitpunkt zu Endprodukten für die menschliche oder tierische Ernährung verarbeitet werden.

Produkte dieses Herstellungsverfahrens werden oftmals Sojafleisch, Pflanzenfleisch oder TVP (Texturized Vegetable Protein) genannt.

Bei einem weiteren bekannten Verfahren werden durch geeignete Ein- oder Zweiwellen-Extruder die ovo-lacto-vegetarischen Inhaltsstoffe gemischt, befeuchtet und durch Temperatur- und Scherung in der Struktur so verändert, dass in Verbindung mit einer nachgeschalteten Kühlung eine faserige Struktur entsteht.

Die vorgenannten bekannten Verfahren haben wesentliche Nachteile. So weisen die Produkte aus den nach den bekannten Verfahren hergestellten Fasern eine von Fleisch- oder Fischprodukten deutlich abweichende sensorische Qualität und ein wenig unnatürliches Aussehen auf. Die aus diesen Fasern hergestellten Produkte sind im Mundgefühl oftmals trockener als vergleichbare tierische Produkte. Die Konsistenz der aus diesen Fasern hergestellten Produkte ähnelt oftmals dem von Hackfleisch und nicht der von natürlich gewachsenem Fleisch, welches sich durch Fasern unterschiedlicher Struktur und Stärke auszeichnet.

Außerdem entsprechen die aus dem Stand der Technik bekannten Verfahren nicht den modernen Verbrauchererwartungen an schonende Herstellungsverfahren, die weitgehend naturbelassene Produkte ergeben. Des Weiteren ist die Herstellung eines Fleischersatzproduktes aus den Patentanmeldungen US-A-2005/0112268 und US-A-3 674 500 bekannt.

Der vorliegenden Erfindung liegt die Aufgabe zugrunde, ein ovo-lacto-vegetarisches Nahrungsmittel oder Nahrungsmittelzwischenprodukt zu schaffen, das gegenüber den ovo-lacto-vegetarischen Nahrungsmitteln, die nach dem oben beschriebenen herkömmlichen Verfahren hergestellt wurden, eine verbesserte sensorische Qualität und eine fleisch- oder fischähnliche, faserige Struktur aufweisen und schonend hergestellt werden.

Die Erfindung löst diese Aufgabe durch ein Nahrungsmittel bzw. Nahrungsmittelzwischenprodukt , das erhalten wird in einem Verfahren gemäß Anspruch 1.

Vorteilhafterweise folgen die vorgenannten Schritte des Verfahrens aufeinander folgend von Schritt a) zu Schritt f). Bevorzugte Ausführungsformen der Erfindung sind in den Unteransprüchen angegeben.

Zunächst seien einige im Rahmen der Erfindung verwendete Begriffe erläutert.

Der Begriff Nahrungsmittel bezeichnet jedes Mittel, das der Ernährung von Mensch oder Tier dient. Ein vegetarisches Nahrungsmittel bzw. Nahrungsmittelzwischenprodukt bezeichnet Nahrungsmittel bzw. Nahrungsmittelzwischenprodukte, die ausschließlich oder vorwiegend aus Komponenten pflanzlichen Ursprungs bestehen. Das heißt, bei diesen Produkten wird weitestgehend auf Komponenten tierischen Ursprungs verzichtet, gänzlich jedoch auf Komponenten von toten Tieren.

Eine Untergruppe der vegetarischen Nahrungsmittel bzw. Nahrungsmittelzwischenprodukte stellen die ovo-lacto-vegetarischen Nahrungsmittel bzw. Nahrungsmittelzwischenprodukte dar, bei denen auf eine Fleisch oder Fischkomponente von toten Tieren verzichtet wird, jedoch neben der pflanzlichen Komponente auch Eier und Milch sowie Milchprodukte bei der Herstellung verwendet werden können. Des besseren, einfacheren und umfassenderen Verständnisses wegen wird von ovo-lacto-vegetarischen Nahrungsmitteln gesprochen, obwohl diese auch ohne Ei und ohne Milch bzw. Eiweißträger tierischen Ursprungs hergestellt werden können, also auch rein vegetarisch sein können.

Eine Emulsion ist eine Mehr-Phasen-Mischung mindestens zweier Flüssigkeiten. Eine ovo-lacto-Emulsion weist mindestens eine Ei- oder Milch- bzw. Milchprodukt-Komponente auf. Die Eiweißkomponente kann tierischen Ursprungs (z.B. Kuhmilch) oder pflanzlichen Ursprungs(z.B. Sojamilch)sein. Letztere ist besonders bevorzugt. Die Erfindung hat erkannt, dass sich bei der Verwendung von pflanzlichen Eiweißen, beispielsweise aus Sojamilch in Kombination mit Alginaten als Dickungsmittel, insbesondere Natriumalginat, in dem erfindungsgemäßen Verfahren, eine zu natürlich gewachsenem Fleisch nahezu identische Faserstruktur ergibt.

Dickungsmittel sind Lebensmittelzusatzstoffe, die zum Andicken, insbesondere von Flüssigkeiten, dienen. Beispielhaft genannt sei Alginsäure (E400), Natriumalginat (E401), Kaliumalginat (E402), Ammoniumalginat (E403), Calciumalginat (E404), Prophylenglykoalginat (E405), Agar-Agar (E406), Carrageen (E407), Guarkernmehl (E412), Traganth (E413), Gummiarabicum (E414) Xanthan (E415), Pektin (E440), Methylcellulose (E461), Carboxymethylcellulose (E466), Acetyliertes Distärkephosphat (E1414), Stärkehydrat verestert mit Essigsäureanhydrid (E1420) oder acetyliertes Distärkeadipat (E 1422). In vorliegender Erfindung werden natürliche, insbesondere pflanzliche Dickungsmittel, bevorzugt. Wie bereits erwähnt sind die Alginate besonders geeignet, wobei die wasserlöslichen Alginate, wie beispielsweise Natriumalginat, gegenüber den wasserunlöslichen Alginaten, wie beispielsweise Calciumalginat, bevorzugt sind.

Fällungs- bzw. Koagulationsmittel sind Mittel, die nach Zugabe zu einer Flüssigkeit, beispielsweise Milch, zu einem Ausflocken bzw. Verklumpen von Bestandteilen der Flüssigkeit führen, die auch als Ausfällung oder Fällungsreaktion bekannt ist. In Bezug auf Eiweißstoffe wird in der Literatur auch der Begriff der Gerinnung verwendet.

Bei der Denaturierung von Eiweißen wird die hochgeordnete, dreidimensionale Struktur der Eiweiße in der Regel irreversibel gestört. Ein typisches Beispiel für die Denaturierung von Eiweißen ist die Umwandlung von Hünereiweiß (bei Raumtemperatur flüssiger Konsistenz) durch Erhitzung in kochendem Wasser. Die Eiweiße verlieren bei der Erwärmung ihre höhergeordnete, räumliche Struktur, d.h. sie denaturieren, und bilden einen Eiklumpen.

Der Begriff Umlaufverfahren bezeichnet im Rahmen der Erfindung ein Verfahren, in dem eine Flüssigkeit oder Emulsion zumindest zeitweise einer Positionsänderung unterliegt und üblicherweise in einem Kreislauf zirkuliert. In den Kreislauf kann ein Röhren- oder Plattenwärmetauscher integriert sein bzw. der Kreislauf besteht aus diesen.

Ein Plattenärmetauscher setzt sich üblicherweise aus einem Satz hintereinander angeordneter und miteinander verbundener Platten zusammen, die jeweils das zu erwärmende Medium von dem wärmenden Medium trennen. In gleicher Weise funktioniert ein Röhrenwärmetauscher, bei dem an Stelle der Platten Rohre vorliegen.

Unter dem Begriff Faserstrukturen bzw. faserige Strukturen bezeichnet im Rahmen der vorliegenden Erfindung Strukturen, die im Verhältnis zur Länge dünn und flexibel sind. Die Faserstrukturen bestehen erfindungsgemäß aus natürlichen Polymeren, vorzugsweise Pflanzeneiweißfasern bzw. Tiereiweißfasern wie Ei- oder Milcheiweißfasern. Im Unterschied zu den aus den Stand der Technik bekannten und nach den eingangs genannten herkömmlichen Verfahren hergestellten Fasern sind die Fasern vorliegender Erfindung in Form und Textur nicht uniform, sondern ähneln der von natürlich gewachsenen Fleisch bzw. sind mit diesen nahezu identisch.

In dem erfindungsgemäßen Verfahren wird als Ausgangsmaterial eine ovo-lacto-Emulsion eingesetzt, die vorzugsweise einen Eiweißgehalt von 2-5 Gew.-%, vorzugsweise 3,7 Gew.-% und einen Fettgehalt von 2 bis 5 Gew.-%, vorzugsweise 2,8 Gew.-% aufweist. Die Emulsion wird anschließend erhitzt bis die Eiweiße, zumindest zum Teil, denaturieren. Dies geschieht vorzugsweise bei 60 bis 98 °C, vorzugsweise 85 bis 95 °C, besonders bevorzugt 90 °C. Vorteilhafterweise erfolgt die Erhitzung der Emulsion gleichmäßig, vorzugsweise im Umlaufverfahren über einen Röhren- oder Plattenwärmetauscher. Die Erhitzung kann auch in anderen geeigneten Geräten, beispielsweise in Kuttern, erfolgen. Vor, während oder nach der Erhitzung wird in die Emulsion ein Dickungsmittel, vorzugsweise pflanzlichen Ursprungs, besonders bevorzugt Alginat, insbesondere wasserlösliches Alginat, insbesondere Natriumalginat, eingearbeitet. Dieses Dickungsmittel kann Faserstrukturen enthalten, die vorzugsweise pflanzlichen Ursprungs sind. Die Menge des Dickungsmittel beträgt gemäß einer bevorzugten Ausführungsform der Erfindung bezogen auf die Gesamtmenge der Emulsion 1,0 bis 3,0 Gew.-%. Mit oder nach der Einarbeitung des Dickungsmittels in die Emulsion wird des Weiteren ein Fällungs- bzw. Koagulationsmittel, vorzugsweise eine 5,0 bis 9,0 %-ige Fällungsmittelösung, vorzugsweise eine Calciumionen aufweisende Lösung, beispielsweise Calciumchloridlösung, eingearbeitet. Vorzugsweise beträgt die Menge des Fällungs- bzw. Koagulationsmittels bezogen auf die Gesamtmenge 14,0 bis 20,0 Gew.-%. Sowohl die Einarbeitung des Dickungs-, als auch des Fällungs- bzw. Koagulationsmittels erfolgt durch Einrühren bzw. Einmischen, vorzugsweise mittels eines Rührers, Rührwerks, Mischers,Dispergierers oder Homogenisators, die eine radiale und/oder axiale Verwirbelung der Emulsion bzw. Masse bewirken. Es werden Geräte eingesetzt, die sowohl mischen als auch stark scheren bzw. zerkleinern können. Im Stand der Technik wird dazu eine sogenannter "Kutter" verwendet. Dabei handelt es sich um ein Gerät zum Zerkleinern, Vermengen oder Homogenisieren von Stoffen oder Gemischen in jeden gewünschten Feinheitsgrad. Sichelmesser mit optionaler Rotationsgeschwindigkeit sorgen mit ihrer scharfen Seite für hohe Scherkräfte. Lässt man die Schermesser entgegen ihrer Schneidrichtung oder bei geringen Drehzahlen laufen, sind die Scherkräfte gering, was insbesondere beim Mischen bzw. Vorgang der Koagulation erwünscht ist.

Gemäß dem Verfahren vorliegender Erfindung wird das Dickungsmittel in Schritt c) in die Emulsion eingearbeitet. Die Einarbeitung findet unter starker Scherung statt, das heißt, das Einarbeiten erfolgt bei hohen Drehzahlen. In der Praxis wird dabei zunächst mit einer geringen Drehzahl von beispielsweise 1000 min⁻¹ begonnen und anschließend auf eine Drehzahl von 2500-3600 min⁻¹ erhöht.

Keine bzw. nur eine geringe Scherung ist in Schritt d) des Verfahrens vorliegender Erfindung erwünscht. Andernfalls würden die sich bei und nach Zugabe des Fällungs- bzw. Koagulationsmittels bildenden Faserstrukturen, zumindest teilweise, zerlegt werden. In der Praxis wird daher nur eine geringe Drehzahl, unter 150 min⁻¹ verwendet und/oder die Schermesser im Kutter rotieren entgegengesetzt zur Schneidrichtung. Vorteilhafterweise wird das Fällungs- bzw. Koagulationsmittel in unmittelbarer Nähe zum Rührwerkzeug, beispielsweise den Schermessern im Kutter, in die Emulsion eingemischt. Dadurch wird eine schnelle und gleichmäßige Verteilung des Fällungs- bzw. Koagulationsmittels in der Emulsion erreicht, wobei sich Fasern von Längen bis zu mehreren Millimetern und Zentimetern als Folge der Reaktion von Fällungs- bzw. Koagulationsmittel mit den Komponenten der Emulsion, insbesondere der Eiweißkomponente, bilden und unerwünschte Einschlüsse und Verklumpungen vermieden werden. Das Einarbeiten des Dickungs- und Fällungs- bzw. Koagulationsmittels kann erfindungsgemäß über einem Zeitraum von 2 bis 7 min, vorzugsweise 2 bis 5 min, weiter bevorzugt 3 bis 4 min, besonders bevorzugt 3 min, erfolgen und/oder es schließt sich der Einarbeitung ein Mischvorgang mit den vorgenannten Zeitintervallen an. Um ein Schäumen beim Einarbeiten und Mischen der Komponenten zu unterdrücken kann der Mischung Öl, beispielsweise Sonnenblumenöl, hinzugefügt werden.

Erfindungsgemäß folgt zwischen den Einarbeitungsschritten und der Trennung der sich in der Emulsionsmasse bildenden Phasen ein Ruheschritt. In diesem Ruheschritt findet keine Mischung oder Umwälzung statt, wodurch sich insbesondere stabilere Strukturen ausbilden können. Der Ruheschritt beträgt erfindungsgemäß 20 bis 120 min, bevorzugt 30 bis 60 min, beispielsweise 60 min.

Anschließend wird die feste Phase von der flüssigen Phase durch mindestens einmaliges absieben und/oder zentrifugieren und/oder abpressen, vorzugsweise bei einem Druck von bis zu 15 bar, besonders bevorzugt 3-6 bar, getrennt. Eine teilweise Abtrennung kann auch bereits im Ruheschritt erfolgen, zum Beispiel indem die Masse zum Ruhen in Loren mit Siebeinsatz eingefüllt wird. Die abgetrennte feste Phase weist vorzugsweise einen Feststoffgehalt von über 20 Gew.-%, beispielsweise 24-25 Gew.-% auf und kann bei Bedarf weiterverarbeitet werden. Das somit erhaltenen Nahrungsmittel oder Nahrungsmittelzwischenprodukt hat vorzugsweise einen pH-Wert von 5,8 bis 6,2 und beispielsweise einen Gesamtfettanteil von 9,2 Gew.-%, einen Gesamteiweißanteil von 8,5 Gew.-%, einen Kohlenhydratanteil von 7,5 Gew.-%, einen Wasseranteil von 76,8 Gew.-%, sowie einen Anteil an Asche von 1,6 Gew.-%.Bei der Weiterverarbeitung werden üblicherweise Zusatzstoffe, beispielsweise Geschmackstoffe, Farbstoffe, Vitamine, Dickungsmittel und Mineralstoffe dazugegeben. Der Festphasenmasse kann anschließend noch eine gewünschte Form gegeben und diese beispielsweise paniert werden.

Nachfolgend wird die Erfindung anhand von Beispielen näher erläutert.

### Beispiel 1 (nicht erfindungsgemäß)

Ein ovo-lacto-vegetarisches Nahrungsmittelzwischenprodukt wird gemäß der nachfolgenden Beschreibung zubereitet.

In einem Verwirbelungsmixer werden 55,00 kg kaltes Wasser gelassen und 3,00 kg Sojaeiweiß bei einer Drehzahl von 1500 min⁻¹ zugegeben und bei einer Drehzahl von 1500 min⁻¹ 3 Minuten homogen gemixt. Anschließend wird die Mischung in einen Erhitzungsbehälter gepumpt, 2,00 kg Sonnenblumenöl zugegeben und mittels einer Faßpumpe homogen gemischt und auf 90 bis 92°C erhitzt. Im nächsten Schritt wird die erhaltenen Emulsion in einem Koagulationsbehälter mit Verwirbelungsmixer gepumpt und bei einer Drehzahl von 1500 min⁻¹ 1,10 kg Natriumalginat zugegeben und anschließend bei einer Drehzahl von 1500 min⁻¹ für 3 Minuten gemischt. Danach wird bei gleicher Drehzahl langsam und gleichmäßig 11,70 kg Calciumchloridlösung (0,70 kg Calciumchlorid gelöst in 11,00 kg Wasser) in die Emulsion eingemischt und anschließend bei einer Drehzahl von 1500 min⁻¹ für 3 Minuten verwirbelt. Die erhaltene Masse wird bei Raumtemperatur im Koagulationsbehälter für 30 bis 120 Minuten ruhen gelassen, anschließend in Presskörbe abgelassen und ein- oder zweimal bei einem Druck von 3-6 bar für 2-6 Minute gepresst. Die dann erhaltene feste Phase mit einem Feststoffgehalt von 24-25 Gew.-% kann als Nahrungsmittelzwischenprodukt weiterverarbeitet werden.

### Beispiel 2

Ein ovo-lacto-vegetarisches Nahrungsmittelzwischenprodukt wird gemäß der nachfolgenden Beschreibung zubereitet.

In einem Kutter mit 500 1 Fassungsvermögen werden 177,00 kg kaltes oder erhitztes Wasser eingeleitet, gegebenenfalls über die Mantelheizung des Kutters erwärmt und 8,00 kg Sojaeiweiß und 7,40 kg Sonnenblumenöl während des Kutterns bei einer Drehzahl von 500 min⁻¹ (Tellerststufe I)zugegeben. Anschließend wird das Gemisch bei einer Drehzahl von 1000 min⁻¹ (Tellerststufe II) 3 Tellerumdrehungen und bei einer Drehzahl von 2500 min⁻¹ (Tellerststufe II) 2 Tellerumdrehungen gekuttert. Anschließend werden bei einer Drehzahl von 500 min⁻¹ (Tellerststufe I) 18,00 kg Wasser in Form von Wasserdampf in den Kutter eingeleitet, bis sich im Kutter eine Temperatur von 85°C eingestellt hat. Im nächsten Schritt wird die Emulsion im Kutter bei einer Drehzahl von zunächst 1000 min⁻¹ (Tellerststufe II) unter Einarbeitung von 4,00 kg Natriumalginat gekuttert und anschließend die Drehzahl auf 2500 min⁻¹ (Tellerststufe II) für 6 Tellerumdrehungen und 3500 min⁻¹ (Tellerststufe II) für 3 Tellerumdrehungen erhöht, bevor sie anschließend auf 1000 min⁻¹ (Tellerstufe I) für 6 Tellerumdrehungen verringert wird. Danach wird bei einer Drehzahl von 60 min⁻¹ langsam und gleichmäßig 45,40 kg Calciumchloridlösung (2,40 kg Calciumchlorid gelöst in 43,00 kg Wasser)in unmittelbarer Nähe zu den Messern des Kutters in die Emulsion eingemischt und anschließend bei einer Drehzahl von 120 min⁻¹ (Tellerstufe I) 5-6 Tellerumdrehungen gekuttert. Die erhaltene Masse wird aus dem Kutter in Kipploren mit Siebeinsatz abgelassen, damit die flüssige Phase teilweise abgetrennt werden kann und bei Raumtemperatur für 1-2 Stunden ruhen gelassen. Danach erfolgt das Pressen. Die dann erhaltene feste Phase mit einem Feststoffgehalt von 24-25 Gew.-% kann als Nahrungsmittelzwischenprodukt weiterverarbeitet werden.

### Beispiel 3

Das ovo-lacto-vegetarische Nahrungsmittelzwischenprodukt gemäß Beispiel 2 wird in vorliegendem Beispiel zu dem Nahrungsmittel "Nuggets" weiterverarbeitet.

Dazu werden 210,00 kg des gemäß Beispiel 2 erhaltenen Nahrungsmittelzwischenprodukts, 1,80 kg Methylcellulose und bis zu 60,00 kg Wasser in einem Mischer oder Kneter für 4 Minuten homogen gemischt. Der erhaltenen Mischung werden 40,00 kg einer homogenen Mischung, bestehend aus 8,00 kg Eiweißpulver und 32,00 kg Reismehl zugegeben und anschließend für 3 Minuten homogen gemischt. Während des Mischvorgangs werden 8,00 kg Sojaöl zugegeben. Als weitere Komponente werden 6,20 kg einer Mischung bestehend aus 3,60 kg veganen Huhn-Trockenaroma, 1,60 kg feinen Meersalz, 0,40 kg fein gemahlenen Pfeffer und 0,60 kg Knoblauchpulver zugegeben und 3 Minuten homogen gemischt. Die erhaltene Rohmasse wird anschließend als Nuggets geformt und diese zunächst in einer Nasspanade (in kalten Wasser angesetztes Weizenmehl) und anschließend in einer Trockenpanade (Paniermehl) gewälzt. Die erhaltenen Nuggets können anschließend frittiert und gegessen oder als Convenience-Produkt für den Endverbraucher abgepackt und gegebenenfalls konserviert werden.

## Patentansprüche

1. Verfahren zur Herstellung eines fleisch- oder fischähnlichen, faserigen, ovo-lacto-vegetarischen Nahrungsmittels oder Nahrungsmittelzwischenprodukts, wobei das Verfahren folgende Schritte umfasst:
a) Bereitstellung einer Emulsion, enthaltend durch Melken erhaltene tierische Eiweiße und Fette und/oder pflanzliche Eiweiße und Fette,
b) Erhitzen der Emulsion,
c) Einarbeitung eines Dickungsmittels in die Emulsion unter starker Scherung bei einer anfänglich geringen Drehzahl von vorzugsweise 1000 min⁻¹, die anschließend auf eine Drehzahl von 2500-3600 min⁻¹ erhöht wird,
d) Einarbeitung eines Fällungs- bzw.
Koagulationsmittels in die Emulsion möglichst ohne Scherung bei einer geringen Drehzahl von unter 150 min⁻¹,
e) Einhaltung einer Ruhezeit von 20 bis 120 min und
f) Trennung der sich bildenden flüssigen Phase von der festen Phase der aus der Emulsion gebildeten Masse.

2. Verfahren nach Anspruch 1, **dadurch gekennzeichnet, dass** die Emulsion in Schritt a) einen Eiweißgehalt von 2 bis 5 Gew.-%, vorzugsweise 3,7 Gew.-% aufweist.

3. Verfahren nach Anspruch 1 oder 2, **dadurch gekennzeichnet, dass** die Eiweiße in der Emulsion pflanzlichen Ursprungs sind und vorzugsweise aus Sojamilch stammen.

4. Verfahren nach einem der Ansprüche 1 bis 3, **dadurch gekennzeichnet, dass** die Emulsion in Schritt a) einen Fettgehalt von 2 bis 5 Gew.-%, vorzugsweise 2,8 Gew.-% aufweist.

5. Verfahren nach einem der Ansprüche 1 bis 4, **dadurch gekennzeichnet, dass** die Emulsion in Schritt b) auf eine Temperatur erhitzt wird, bei der die Eiweiße, zumindest teilweise, denaturieren.

6. Verfahren nach einem der Ansprüche 1 bis 5, **dadurch gekennzeichnet, dass** die Emulsion in Schritt b) auf eine Temperatur von 60 bis 98 °C, vorzugsweise 85 bis 95 °C, besonders bevorzugt 90 °C erhitzt wird.

7. Verfahren nach einem der Ansprüche 1 bis 6, **dadurch gekennzeichnet, dass** die Erhitzung der Emulsion in Schritt b) in einem geeigneten Gerät, vorzugsweise Kutter oder Röhren- oder Plattenwärmetauscher, vorzugsweise im Umlaufverfahren, erfolgt.

8. Verfahren nach einem der Ansprüche 1 bis 7, **dadurch gekennzeichnet, dass** das Dickungsmittel ein pflanzliches Dickungsmittel, vorzugsweise ein Alginat, besonders bevorzugt ein wasserlösliches Alginat, insbesondere Natriumalginat, ist.

9. Verfahren nach einem der Ansprüche 1 bis 8, **dadurch gekennzeichnet, dass** das Dickungsmittel auch Faserstrukturen, vorzugsweise pflanzliche Faserstrukturen, enthalten kann.

10. Verfahren nach einem der Ansprüche 1 bis 9, **dadurch gekennzeichnet, dass** das Dickungsmittel, bezogen auf die Gesamtmenge der Emulsion, in einer Menge von 1,0 bis 3,0 Gew.-% zugegeben wird.

11. Verfahren nach einem der Ansprüche 1 bis 9, **dadurch gekennzeichnet, dass** in Schritt d) als Fällungs- bzw. Koagulationsmittel eine 5,0 bis 9,0 %-ige Fällungsmittelösung, vorzugsweise eine Calciumionen aufweisende Lösung, beispielsweise Calciumchloridlösung, eingesetzt wird.

12. Verfahren nach einem der Ansprüche 1 bis 11, **dadurch gekennzeichnet**, **das** die Menge des Fällungs- bzw. Koagulationsmittels, bezogen auf die Gesamtmenge 14,0 bis 20,0 Gew.-% beträgt.

13. Verfahren nach einem der Ansprüche 1 bis 11, **dadurch gekennzeichnet**, **das** die Einarbeitung des Dickungs-, Fällungs- bzw. Koagulationsmittels durch Einrühren bzw. Einmischen, vorzugsweise mittels eines Rührers, Rührwerks oder Mischers, beispielsweise eines "Kutters" erfolgt.

14. Verfahren nach einem der Ansprüche 1 bis 13, **dadurch gekennzeichnet, dass** das in Schritt c) und/oder d) oder bei beiden Schritten gemeinsam die Einarbeitung einen Misch- bzw. Schervorgang von 2 bis 7 Minuten, vorzugsweise 2 bis 5 Minuten, weiter bevorzugt 3 bis 4 Minuten, besonders bevorzugt 3 Minuten umfasst.

15. Verfahren nach einem der Ansprüche 1 bis 14, **dadurch gekennzeichnet, dass** die Ruhezeit im Schritt e) 30 bis 60 min, bevorzugt 60 min beträgt.

16. Verfahren nach einem der Ansprüche 1 bis 15, **dadurch gekennzeichnet, dass** im Schritt f) die Trennung der festen Phase von der flüssigen Phase durch mindestens einmaliges Absieben und/oder Zentrifugieren und/ oder Abpressen, vorzugsweise bei einem Druck von bis zu 15 bar, besonders bevorzugt bei einem Druck von 3-6 bar erfolgt.

17. Verfahren nach einem der Ansprüche 1 bis 16, **dadurch gekennzeichnet, dass** die in Schritt f) abgetrennte feste Phase einen Feststoffgehalt von mindestens 20 Gew.-%, vorzugsweise 24-25 Gew.-% aufweist.

18. Verfahren nach einem der Ansprüche 1 bis 17, **dadurch gekennzeichnet, dass** sich mindestens ein weiterer Verfahrensschritt anschließt, in dem die in Schritt f) erhaltene feste Phase weiterverarbeitet wird, vorzugsweise durch Zugabe von Stoffen ausgewählt aus der Gruppe bestehen aus: Geschmackstoffe, Farbstoffe, Vitamine und Mineralstoffe, Dickungsmittel und/ oder Formgebung und/ oder Panierung.

## Claims

1. Process for the preparation of a meat- or fish-like, fibrous, ovo-lacto-vegetarian foodstuff or intermediate foodstuff, which process comprises the following steps:
a) providing an emulsion, comprising animal proteins and fats obtained by milking, and/or vegetable proteins and fats,
b) heating the emulsion,
c) incorporating a thickener into the emulsion with vigorous shearing at an initially low rotational speed of preferably 1000 min⁻¹, which is subsequently raised to a rotational speed of 2500-3600 min⁻¹,
d) incorporating a precipitant and/or coagulant into the emulsion with as little shearing as possible, if any, at a low rotational speed of below 150 min⁻¹,
e) maintaining a resting time of from 20 to 120 min and
f) separating the liquid phase which is forming from the solid phase of the material formed from the emulsion.

2. Method according to Claim 1, **characterized in that** the emulsion has a protein content of from 2 to 5% by weight, preferably 3.7% by weight, in step a).

3. Method according to Claim 1 or 2, **characterized in that** the proteins in the emulsion are of vegetable origin and are preferably derived from soya milk.

4. Method according to any of Claims 1 to 3, **characterized in that** the emulsion has a fat content of from 2 to 5% by weight, preferably 2.8% by weight, in step a).

5. Method according to any of Claims 1 to 4, **characterized in that** the emulsion in step b) is heated to a temperature at which the proteins denature at least in part.

6. Method according to any of Claims 1 to 5, **characterized in that** the emulsion is heated to a temperature of from 60 to 98°C, preferably from 85 to 95°C, especially preferably 90°C, in step b).

7. Method according to any of Claims 1 to 6, **characterized in that** the heating of the emulsion in step b) is carried out in a suitable device, preferably cutter or shell-and-tube or plate heat exchanger, preferably in the circulating mode.

8. Method according to any of Claims 1 to 7, **characterized in that** the thickener is a vegetable thickener, preferably an alginate, especially preferably a water-soluble alginate, in particular sodium alginate.

9. Method according to any of Claims 1 to 8, **characterized in that** the thickener may also comprise fibrous structures, preferably vegetable fibrous structures.

10. Method according to any of Claims 1 to 9, **characterized in that** the thickener is added in an amount of from 1.0 to 3.0% by weight, based on the total amount of the emulsion.

11. Method according to any of Claims 1 to 9, **characterized in that** the precipitant and/or coagulant employed in step d) is a 5.0% to 9.0% strength precipitant solution, preferably a solution which contains calcium ions, for example a calcium chloride solution.

12. Method according to any of Claims 1 to 11, **characterized in that** the amount of precipitant and/or coagulant is from 14.0 to 20.0% by weight, based on the total amount.

13. Method according to any of Claims 1 to 11, **characterized in that** the incorporation of the thickener, precipitant and/or coagulant is effected by stirring in and/or mixing in, preferably by means of a stirrer, stirring device or mixer, for example a cutter.

14. Method according to any of Claims 1 to 13, **characterized in that** the incorporation in step c) and/or d), or in both steps together, comprises a mixing and/or shearing process of from 2 to 7 minutes, preferably from 2 to 5 minutes, furthermore preferably from 3 to 4 minutes, especially preferably 3 minutes.

15. Method according to any of Claims 1 to 14, **characterized in that** the stirring time in step e) is from 30 to 60 min, preferably 60 min.

16. Method according to any of Claims 1 to 15, **characterized in that** the separation of the solid phase from the liquid phase in step f) is effected by at least one sieving and/or centrifuging and/or pressing process, preferably at a pressure of up to 15 bar, especially preferably at a pressure of 3-6 bar.

17. Method according to any of Claims 1 to 16, **characterized in that** the solid phase separated off in step f) has a solids content of at least 20% by weight, preferably 24-25% by weight.

18. Method according to any of Claims 1 to 17, **characterized in that** at least one further method step is performed downstream, in which the solid phase obtained in step f) is processed, preferably by addition of substances selected from the group consisting of: flavourings, colours, vitamins and minerals, thickeners and/or shaping and/or breading.

## Revendications

1. Procédé de fabrication d'un aliment ovo-lacto-végétarien ou produit alimentaire intermédiaire fibreux, similaire à la viande ou au poisson, ledit procédé comportant les étapes suivantes :
a) préparation d'une émulsion, contenant des albumines et des graisses animales obtenues par les produits de la traite et/ou des albumines et des graisses végétales,
b) chauffage de l'émulsion,
c) incorporation d'un épaississant dans l'émulsion moyennant un fort cisaillement avec une faible vitesse de rotation initiale, de préférence, de 1 000 min⁻¹, qui est augmentée ensuite jusqu'à une vitesse de rotation de 2 500 à 3 600 min⁻¹,
d) incorporation d'un agent précipitant ou coagulant dans l'émulsion sans cisaillement en présence d'une faible vitesse de rotation inférieure à 150 min⁻¹,
e) maintien d'un temps de repos de 20 à 120 min et
f) séparation entre la phase liquide en formation et la phase solide de la masse formée à partir de l'émulsion.

2. Procédé selon la revendication 1, **caractérisé en ce que** l'émulsion dans l'étape a) possède une teneur en albumine de 2 à 5 % en poids, de préférence 3,7 % en poids.

3. Procédé selon la revendication 1 ou 2, **caractérisé en ce que** les albumines dans l'émulsion sont d'origine végétale et sont issues de préférence du lait de soja.

4. Procédé selon l'une quelconque des revendications 1 à 3, **caractérisé en ce que** l'émulsion dans l'étape a) possède une teneur en graisses de 2 à 5 % en poids, de préférence 2,8 % en poids.

5. Procédé selon l'une quelconque des revendications 1 à 4, **caractérisé en ce que** l'émulsion dans l'étape b) est chauffée à une température à laquelle les albumines sont dénaturées, au moins partiellement.

6. Procédé selon l'une quelconque des revendications 1 à 5, **caractérisé en ce que** l'émulsion dans l'étape b) est chauffée à une température de 60 à 98°C, de préférence 85 à 95°C, encore mieux de 90°C.

7. Procédé selon l'une quelconque des revendications 1 à 6, **caractérisé en ce que** le chauffage de l'émulsion dans l'étape b) est effectué dans un appareil approprié, de préférence des hachoirs de type cutter, ou des échangeurs thermiques à tubes ou plaques, de préférence dans un procédé par circulation.

8. Procédé selon l'une quelconque des revendications 1 à 7, **caractérisé en ce que** l'épaississant est un épaississant végétal, de préférence un alginate, encore mieux un alginate soluble dans l'eau, en particulier un alginate de sodium.#

9. Procédé selon l'une quelconque des revendications 1 à 8, **caractérisé en ce que** l'épaississant peut également contenir des structures à fibres, de préférence des structures à fibres végétales.

10. Procédé selon l'une quelconque des revendications 1 à 9, **caractérisé en ce que** l'épaississant est ajouté dans une quantité de 1,0 à 3,0 % en poids par rapport à la quantité totale de l'émulsion.

11. Procédé selon l'une quelconque des revendications 1 à 9, **caractérisé en ce que** dans l'étape d), l'agent précipitant ou coagulant utilisé est une solution contenant 5,0 à 9,0 % d'agent précipitant, de préférence une solution contenant des ions calcium, telle qu'une solution de chlorure de calcium.

12. Procédé selon l'une quelconque des revendications 1 à 11, **caractérisé en ce que** la quantité d'agent précipitant ou coagulant par rapport à la quantité totale est de 14,0 à 20,0 % en poids.

13. Procédé selon l'une quelconque des revendications 1 à 11, **caractérisé en ce que** l'incorporation de l'épaississant, de l'agent précipitant ou coagulant est effectuée par délayage ou mélange, de préférence au moyen d'un batteur-mixeur, d'un malaxeur ou d'un mélangeur, tel qu'un mélangeur de type « cutter ».

14. Procédé selon l'une quelconque des revendications 1 à 13, **caractérisé en ce que** dans l'étape c) et/ou d) dans les deux étapes conjointement, l'incorporation englobe un processus de mélange ou cisaillement de 2 à 7 minutes, de préférence de 2 à 5 minutes, encore mieux de 3 à 4 minutes, de manière particulièrement préférée de 3 minutes.

15. Procédé selon l'une quelconque des revendications 1 à 14, **caractérisé en ce que** le temps de repos dans l'étape e) est de 30 à 60 min, de préférence 60 min.

16. Procédé selon l'une quelconque des revendications 1 à 15, **caractérisé en ce que** dans l'étape f), la séparation entre la phase solide et la phase liquide est réalisée par au moins un unique tamisage et/ou une unique centrifugation et/ou une unique extraction par pression, de préférence avec une pression de 15 bars maximum, encore mieux avec une pression de 3 à 6 bars.

17. Procédé selon l'une quelconque des revendications 1 à 16, **caractérisé en ce que** la phase solide séparée dans l'étape f) possède une teneur en matières solides de 20 % en poids minimum, de préférence de 24 à 25 % en poids.

18. Procédé selon l'une quelconque des revendications 1 à 17, **caractérisé en ce qu'**il est prolongé par au moins une étape supplémentaire, dans laquelle la phase solide obtenue dans l'étape f) subit un traitement ultérieur, de préférence par addition de substances choisies dans le groupe formé par :
les aromatisants, les colorants, les vitamines et les substances minérales, les épaississants, et/ou avec façonnage et/ou avec enrobage de panure.
